# EUROPEAN PATENT SPECIFICATION

(11) **EP 3 069 593 B1**
(45) Date of publication and mention of the grant of the patent: **20.11.2019**
(21) Application number: 16160413.7
(22) Date of filing: 15.03.2016
(51) Int. Cl.: A01D 34/00, A47L 9/00, G05D 1/02

(54) **CHARGING EQUIPMENT FOR MOVING ROBOT**
LADEVORRICHTUNG FÜR MOBILEN ROBOTER
ÉQUIPEMENT DE CHARGE POUR ROBOT MOBILE

(30) Priority: 16.03.2015 KR 20150036111
(43) Date of publication of application: 21.09.2016
(73) Proprietor: LG Electronics Inc., Seoul 07336 (KR)
(72) Inventor: SONG, Hyunsup, Seoul 08592 (KR); WOO, Jongjin, Seoul 08592 (KR); NAM, Dongkyun, Seoul 08592 (KR)
(74) Representative: Vossius & Partner Patentanwälte Rechtsanwälte mbB

(56) References cited:
- EP-A1- 2 658 073
- EP-A1- 2 667 271
- WO-A1-2013/100833
- WO-A1-2015/108454
- WO-A2-2005/074362
- DE-A1-102008 038 199
- US-B1- 6 525 509

## Description

### BACKGROUND OF THE INVENTION

### 1. Field of the Invention

The present invention relates to a system including a charging equipment for a moving robot and the moving robot, and more particularly, to a charging equipment for a lawn mower which moves inside a boundary wire.

### 2. Background of the Invention

A lawn mower is an apparatus for trimming lawn planted in a yard of a house, a playground, etc. The lawn mower may be divided into a home lawn mower used at home, and a tractor lawn mower used in a wide playground or a wide farm.

The home lawn mower is categorized into a walk behind type moved by a man positioned at a rear side of the lawn mower, and a handheld type directly carried by a user's hands.

However, there is a user's difficulty in directly operating the two types of lawn mowers.

Especially, since modern people generally tend to hire a person to trim lawn due to a busy daily life and a difficult trimming operation, high costs are generated.

Thus, an automatic robot type of lawn mower, to prevent high costs and to solve a user's difficulty, is being developed. Research on control of such an automatic robot type of lawn mower is ongoing actively.

Further, in order to realize automatic power supply to the automatic robot type of lawn mower, a charging equipment for the lawn mower is being developed. Since charging performance of the charging equipment is related to a driving control of the automatic robot, research on the charging equipment, as well as research on control of moving performance of the automatic robot, is ongoing.

US 6,525,509 B1 describes a docking system essentially comprising at least one docking station for at least one self-propelled working tool, preferably intended for attendance of ground or floor, the docking station and the tool can, by way of emitted signals, establish contact with each other so that the tool can drive up to the docking station, and the docking station is provided with at least one first transmission part for transmission of energy and/or information between the docking station and the working tool.

WO 2015/108454 A1 discloses a robotic work tool system, comprising a charging station and a robotic work tool.

EP 2 658 073 A1 is directed to a robot, a docking system and a docking method therefore, the docking system comprising a first circuit located in a robot, a first circuit comprising a power storage unit for supply power to the robot and a first main control unit for controlling the movement of the robot.

WO 2013/100833 A1 describes a contact assembly of a robotic garden tool charging device, the contact assembly being arranged to engage a contact element of a robotic garden tool for charging operation.

EP 2 667 271 A1 describes an unmanned autonomous operating system comprising a station provided with a signal generator for supplying an electric pulse current area signal to an area wire that defines an operating area, and an unmanned autonomous vehicle having magnetic sensors for detecting a magnetic field generated by the area wire in a micro computer programmed to recognize the operating area from the detecting magnetic field.

DE 10 2008 038 199 A1 describes an automatically operable lawn mower having a supporting device for lifting the lawn mower and connect it with a control device with which operation of the cutting device of the lawn mower is stopped.

WO 2005/074362 A2 describes a docking station and a robot for docking therein, including corresponding transmission parts.

### SUMMARY OF THE INVENTION

Therefore, an aspect of the detailed description is to provide a charging equipment for a moving robot, capable of smoothly supplying power to the moving robot, and capable of protecting lawn positioned within an operation region of the moving robot.

Another aspect of the detailed description is to provide a charging equipment for a moving robot, capable of minimizing a sharing region between an installation region of the charging equipment and an operation region of the moving robot.

Another aspect of the detailed description is to provide a charging equipment for a moving robot, which is installed outside a closed curve defined by a boundary wire installed at an outer periphery of an operation region.

To achieve these and other advantages and in accordance with the purpose of this specification, as embodied and broadly described herein, there is provided a system including a charging equipment for a moving robot and the moving robot, as defined by claim 1.

In an embodiment of the present invention, the bottom unit may be provided with a plurality of holes.

In an embodiment of the present invention, a coupling angle between the terminal unit and the supporting unit may be changed by an external force.

In an embodiment of the present invention, if the moving robot is being charged, the supporting unit may be provided with a concaved portion facing the body of the moving robot.

In an embodiment of the present invention, an IR sensor may be attached to a side surface of the supporting unit, and the attached IR sensor may transmit a preset signal to the moving robot.

In an embodiment of the present invention, the supporting unit may include a plurality of rods, and the plurality of rods may be formed to have different diameters, and may be sequentially coupled to each other. As the coupled state among the plurality of rods is changed, a length of the supporting unit may be changed.

In an embodiment of the present invention, the bottom unit may include a first bottom member installed on a ground surface, and a second bottom member buried below the ground surface. At least one of the bottom unit, the supporting unit, and the terminal unit may be inserted into the second bottom member, as the coupled state among the bottom unit, the supporting unit and the terminal unit is changed.

In an embodiment of the present invention, at least one of the bottom unit, the supporting unit, and the terminal unit may include coupling portions connected to the boundary wire.

In an embodiment of the present invention, the bottom unit may be installed such that its one surface contacts the boundary wire.

The present invention may have the following advantages.
Firstly, when the charging equipment for supplying power to the moving robot (lawn mower) is installed, damage of lawn positioned within an operation region of the lawn mower may be minimized.
Secondly, operation efficiency of the lawn mower may be enhanced by the charging equipment which does not hinder a driving of the lawn mower.

Further, as an installation region and a size of the charging equipment are reduced, a user's convenience in using the lawn mower may be enhanced.

Further scope of applicability of the present application will become more apparent from the detailed description given hereinafter. However, it should be understood that the detailed description and specific examples, while indicating preferred embodiments of the invention, are given by way of illustration only.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIGS. 1A and 1B are conceptual views illustrating an embodiment where a charging equipment for a moving robot according to the present invention is installed at an operation region for a moving robot;
FIGS. 1C and 1D are conceptual views illustrating an embodiment of a moving robot;
FIGS. 2A to 2D are perspective views illustrating a charging equipment for a moving robot according to an embodiment of the present invention, at various angles;
FIGS. 3A to 3D are views illustrating an embodiment of a charging equipment to which a moving robot according to the present invention has been coupled;
FIGS. 4A and 4B are views illustrating an embodiment of a terminal unit of a charging equipment for a moving robot according to the present invention;
FIGS. 5A, 5B, 6A and 6B are views illustrating an embodiment of a supporting unit of a charging equipment for a moving robot according to the present invention; and
FIG. 7 is a view illustrating an embodiment of a rear surface of the supporting unit of a charging equipment for a moving robot according to the present invention.

### DETAILED DESCRIPTION OF THE INVENTION

Description will now be given in detail of preferred configurations of the present invention, with reference to the accompanying drawings.

For the sake of brief description with reference to the drawings, the same or equivalent components may be provided with the same or similar reference numbers, and description thereof will not be repeated. A singular representation may include a plural representation unless it represents a definitely different meaning from the context.

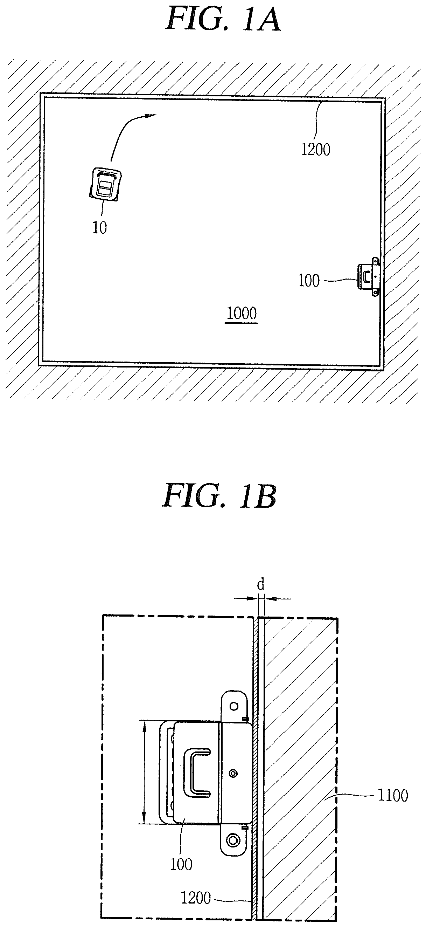

FIGS. 1A and 1B are conceptual views illustrating an embodiment where a charging equipment 100 for a moving robot 10 according to the present invention is installed at an operation region 1000 for the moving robot 10.

Referring to FIG. 1A, the moving robot 10 may autonomously move within a predetermined region. Further, the moving robot 10 may execute a specific function while moving.

More specifically, the moving robot 10 may be a lawn mower. In this case, the specific function may be a function to mow (trim) lawn within the operation region 1000.

The operation region 1000 may be defined by a boundary wire 1200 formed as a closed curve. More specifically, the boundary wire 1200 may be installed at an arbitrary region. And the moving robot 10 may move within a region defined by the closed curve of the boundary wire 1200.

Referring to FIG. 1B, the boundary wire 1200 may be installed inside the operation region 1000. More specifically, the boundary wire 1200 may be installed at a boundary between the operation region 1000 of the moving robot 10 and an external region 1100, or may be spaced from the external region 1100 with a predetermined interval (d). In this case, the predetermined interval (d) for installation of the boundary wire 1200 may be variable. Thus, a user may install the boundary wire 1200 along an outer periphery of the operation region 1000, and may install the boundary wire 1200 more easily because an installation interval of the boundary wire 1200 from the outer periphery or the external region 1100 needs not be considered.

As shown in FIG. 1B, the charging equipment 100 for the moving robot 10 may be installed so as to be connected to the boundary wire 1200. The charging equipment 100 is installed at part of the operation region 1000 including an installation region of the boundary wire 1200.

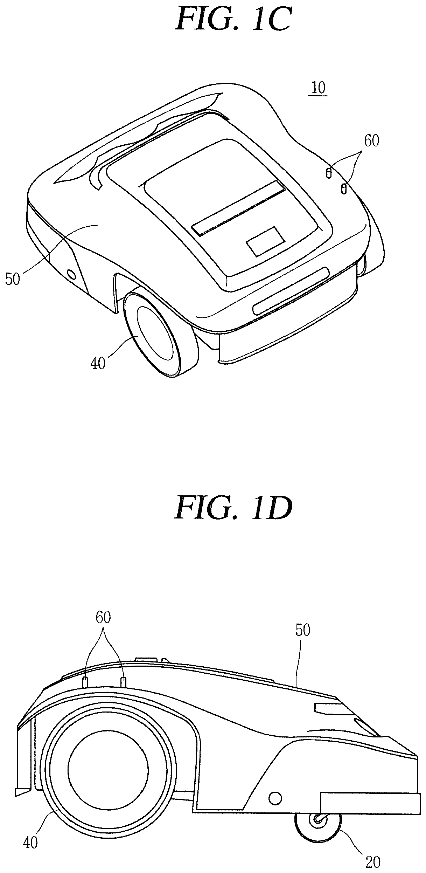

FIGS. 1C and 1D illustrate an embodiment of the moving robot 10, in a case where the moving robot 10 is implemented as a lawn mower.

Referring to FIGS. 1C and 1D, the lawn mower 10 may include a body 50 formed to be moveable and configured to mow lawn. The body 50 may mow lawn inside the operation region 1000 while moving within the boundary wire 1200.

The boundary wire 1200 may be connected to the charging equipment 100 for supplying a current to the boundary wire 1200. That is, the boundary wire 1200 may be connected to the charging equipment 100, and may generate a magnetic field by a current supplied from the charging equipment 100. The body 50 may be charged by being coupled to the charging equipment 100.

A cutting unit (not shown) configured to mow lawn may be provided at the body 50 of the lawn mower. The cutting unit may have a sharp blade formed to be rotatable.

A driving unit, configured to move the body 50 to a desired direction and to rotate the body 50, is provided at the body 50. The driving unit may include a plurality of rotatable wheels, and each of the wheels may be rotatable individually. With such a configuration, the body 50 may be rotatable to a desired direction. More specifically, the driving unit may include at least one main driving wheel 40, and at least one auxiliary wheel 20. The body 50 includes two main driving wheels 40, and the two main driving wheels 40 are installed at a bottom surface of a rear side of the body 50.

The body 50 may include a sensing unit 30 configured to sense the boundary wire 1200. The sensing unit 30 may sense whether the body 50 has reached the boundary wire 1200, whether the body 50 is positioned within a closed surface formed by the boundary wire 1200, whether the body 50 is running along the boundary wire 1200, etc. In this case, the sensing unit 30 may acquire information about the sensing, based on a magnetic field generated by a current which flows on the boundary wire 1200, and based on a voltage generated by the magnetic field by induction.

The sensing unit 30 may also sense various information about a moving distance of the body 50, a moving speed of the body 50, etc.

The body 50 may drive the driving unit 40 based on the information sensed by the sensing unit 30. That is, a controller 20 may control driving of the body 50 based on information measured by the sensing unit 30, thereby driving the driving unit such that the body 50 is positioned within the operation region.

The body 50 may include the sensing unit 30 configured to sense a voltage induced from the boundary wire 1200, and the controller 20 configured to determine a distance between the body 50 and the boundary wire 1200 based on the voltage sensed by the sensing unit 30.

The body 50 may include a power receiving unit 60 configured to receive power by contacting the charging equipment 100. The power receiving unit 60 may include at least one terminal. More specifically, the terminal may be formed to be moveable up and down, by being coupled to an elastic unit (not shown). The power receiving unit 60 may be installed above one of the main driving wheels 40 of the driving unit. The power receiving unit 60 may be installed to be exposed toward an upper side of the body 50.

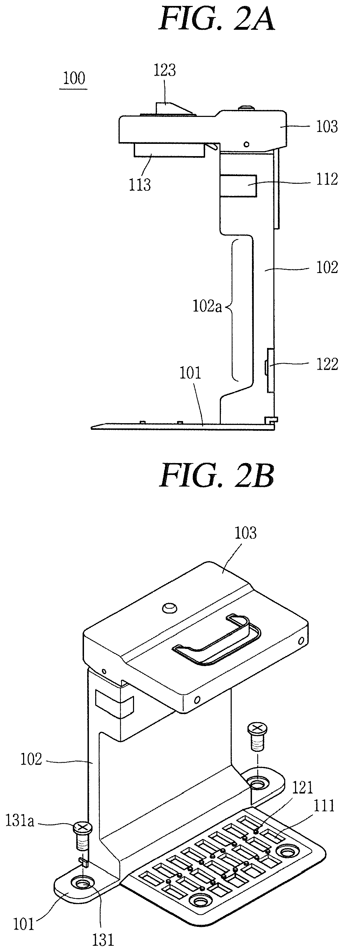

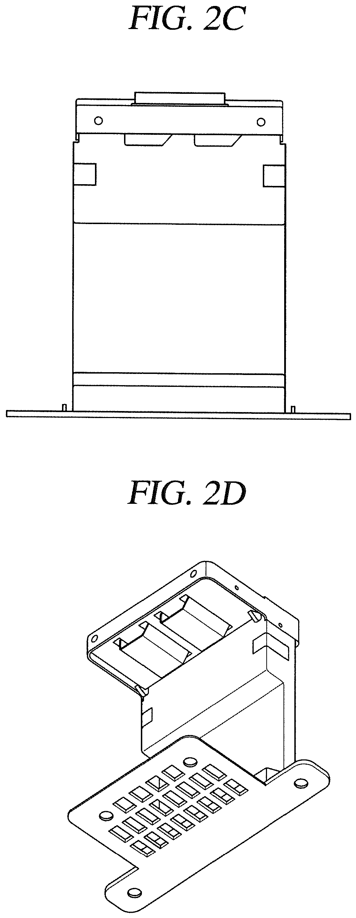

FIGS. 2A to 2D illustrate an embodiment of the charging equipment for the moving robot according to the present invention.

Referring to FIG. 2A, the charging equipment 100 for the moving robot according to the present invention may include at least one of a bottom unit 101, a supporting unit 102 and a terminal unit 103.

As shown in FIG. 2A, the bottom unit 101, the supporting unit 102 and the terminal unit 103 may be formed independently. The charging equipment 100 may be formed as the bottom unit 101, the supporting unit 102 and the terminal unit 103 which are formed independently are coupled to each other. At least one of the bottom unit 101, the supporting unit 102 and the terminal unit 103 may be coupled to each other by a hinge (not shown). Alternatively, at least one of the bottom unit 101, the supporting unit 102 and the terminal unit 103 may be coupled to each other by a coupling part (not shown) formed at each of the bottom unit 101, the supporting unit 102 and the terminal unit 103.

Although not shown, at least one of the bottom unit 101, the supporting unit 102 and the terminal unit 103 may be formed integrally with each other.

More specifically, the bottom unit 101 may be installed on at least part of the operation region of the moving robot. If the moving robot is being charged, the bottom unit 101 may be formed to mount one of the plurality of wheels of the moving robot.

In the following descriptions, under an assumption that the moving robot is being charged, a direction facing the body 50 of the robot is defined as a front surface or a front side of the supporting unit 102, and an opposite direction to the front surface of the front side is defined as a rear surface or a rear side of the supporting unit 102. A normal direction of a ground surface is defined as an upper side of the supporting unit 102, and an opposite direction to the upper side of the supporting unit 102 is defined as a lower side of the supporting unit 102. And the remaining two directions except for the front side, the rear side, the upper side and the lower side of the supporting unit 102, are defined as side surfaces or lateral sides of the supporting unit 102.

In the same manner, a front surface, a rear surface, side surfaces, an upper surface and a lower surface of each of the bottom unit 101 and the terminal unit 103 are defined.

As shown in FIG. 2B, a plurality of holes 111 may be formed at the bottom unit 101. The bottom unit 101 may be provided with protrusions 121 between a first part and a second part where the plurality of homes are formed. With such a configuration, damage of lawn may be minimized since the lawn disposed at part of an installation region of the bottom unit 101 grows through the plurality of holes 111. The protrusions 121 may increase a grip force between the main driving wheel of the moving robot and the bottom unit 101.

Although not shown, the plurality of holes 111 may be more formed at the second part of the bottom unit not contacting the wheels of the moving robot, than at the first part of the bottom unit contacting the wheels of the moving robot when the moving robot is being charged. As another example, the plurality of holes formed at the second part may have a larger size than the plurality of holes formed at the first part.

Referring to FIG. 2B, the bottom unit 101 may include coupling portions 131 configured to fix the bottom unit 101 to the operation region. A coupling hole of a predetermined size may be formed at the coupling portion 131. A coupling member 131a is coupled to the ground surface through the coupling hole of the coupling portion 131, thereby fixing the bottom unit 101 to the ground surface. In the drawings, the coupling portions and the coupling holes are formed at two sides of the bottom unit 101.

Although not shown in FIG. 2B, the coupling portion 131 may be coupled to the boundary wire 1200. In a case where the charging equipment 100 and the boundary wire 1200 receive power from the same power source, the boundary wire 1200 may receive a current through the coupling portions 131.

In this case, the coupling portion 131 may be provided with a current supply terminal (not shown). The coupling portion 131 may be also provided with a wire coupling part (not shown) configured to couple the boundary wire 1200 with the coupling portion 131.

FIG. 2B illustrates an embodiment where the coupling portions are positioned at two side surfaces of the bottom unit. However, the present invention is not limited to this. That is, the coupling portions may be positioned at two side surfaces of the supporting unit 102. In this case, the coupling portions may be connected to the boundary wire installed at an outline of an operation of the moving robot.

More specifically, at least one of the bottom unit and the supporting unit may include the coupling portions connected to the boundary wire installed at an outline of an operation of the moving robot.

The bottom unit may be installed such that its one surface may contact the boundary wire. For instance, the one surface of the bottom unit, which contacts the boundary wire, may be a rear surface of the bottom unit.

Since the coupling portions are disposed at two side surfaces of the bottom unit or the supporting unit, the charging equipment for the moving robot (lawn mower) may be more easily aligned with the boundary wire 1200 in a specific direction.

Referring to FIGS. 2A to 2D, the supporting unit 102 may be coupled to the bottom unit 101. At least one of the supporting unit 102 and the bottom unit 101 may be provided with a coupling member (not shown) for coupling therebetween.

If the moving robot is being charged, the supporting unit 102 may be positioned at a lateral side of the body 50 of the moving robot. The supporting unit 102 may be provided with a concaved portion 102a such that the supporting unit 102 may not contact one of the wheels 40 of the moving robot when the moving robot is being charged. That is, the supporting unit 102 may include a first supporting member (concaved portion 102a) formed to have a first thickness, and a second supporting member formed to have a second thickness and configured to support the charging equipment by being coupled to at least one of the bottom unit 101 and the terminal unit 103.

A sensor 112 may be attached to a side surface of the supporting unit 102. More specifically, the sensor 112 may be an IR sensor.

The IR sensor 112 may transmit a preset signal to the moving robot, or may receive a preset signal from the moving robot. More specifically, the preset signal may include information about a position of the charging equipment, information indicating whether the charging equipment can execute a charging operation or not.

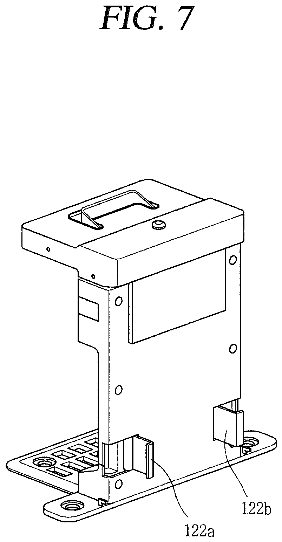

A wire cap 122 may be provided on a rear surface of the supporting unit 102. The wire cap 122 may cover a coupling member between the boundary wire 1200 and the charging equipment 100, in a case where the charging equipment 100 and the boundary wire 1200 are connected to the same power source. An embodiment of the wire cap 122 will be explained in more detail with reference to FIG. 7.

Referring to FIGS. 2A to 2D, the terminal unit 103 may be coupled to the supporting unit 102. More specifically, a coupling angle between the terminal unit 103 and the supporting unit 102 may be changed by an external force.

One or more terminals 113 may be installed on a lower surface of the terminal unit 103. The terminals 113 may be configured to supply power to the moving robot 10, by contacting the power receiving unit 60 of the moving robot 10 (refer to FIGS. 1C and 1D).

As an example, an elastic member (not shown) may be installed between the terminals 1113 and the terminal unit 103. With such a configuration, a protruded length of the terminals 113 may be changed by an external force.

As another example, the terminals 113 may be formed of an elastic material. That is, the terminals 113 may be bent by an external force, and thus a protruded degree of the terminals 113 may be changed.

Although not shown in FIGS. 2A to 2D, the terminal unit 103 may supply power to the moving robot 10 in a wireless manner. In this case, the terminal unit 103 may be provided with a wireless power transmitting portion (not shown), and the moving robot 10 may be provided with a wireless power receiving portion (not shown). With such a configuration, the charging equipment 100 may supply power to the moving robot 10, even in a state where the terminal unit 103 is spaced from an upper surface of the moving robot 10 by a predetermined distance.

As shown in FIGS. 2A to 2D, a handgrip 123 may be installed on an upper surface of the terminal unit 103. A relative coupling position between the terminal unit 103 and the supporting unit 102 may be changed by an external force applied to the handgrip 123.

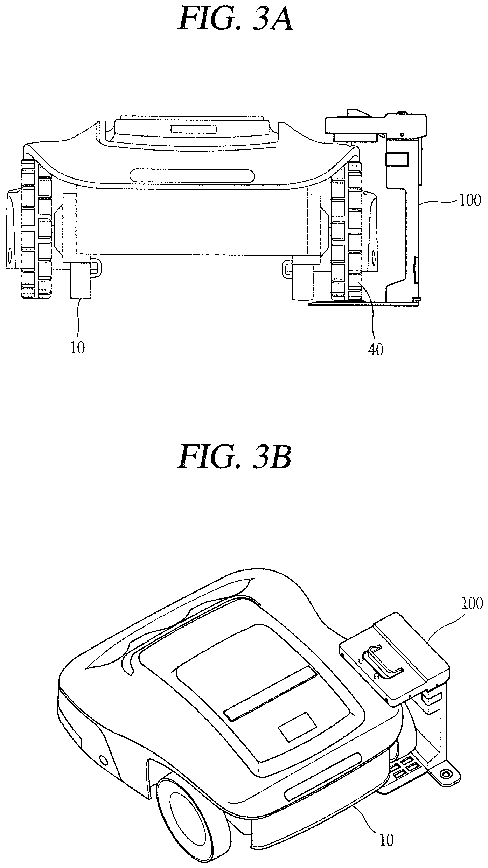

FIGS. 3A to 3D are views illustrating an embodiment of the charging equipment to which the moving robot according to the present invention has been coupled.

As shown in FIGS. 3A and 3B, the bottom unit 101 of the charging equipment 100 may be formed to be mounted to only one of the plurality of wheels 40 of the moving robot 10, in a case where the moving robot 10 is being charged.

More specifically, the wheels 40 mounted to the bottom unit 101 may be main driving wheels installed at the body of the moving robot. As another example, the main driving wheels may be installed at a rear side of the body of the moving robot.

As shown in FIG. 3A, the bottom unit 101 may be formed to have a quadrangular shape. In this case, a length of a side surface of the bottom unit 101 may be greater than a width of the wheel of the moving robot 10.

Referring to FIG. 3A, a length of a front surface or a rear surface of the bottom unit 101 may be formed to be greater than a diameter of the wheel of the moving robot 10. However, the bottom unit 101 of the charging equipment 100 according to the present invention is not limited to this.

As another example, the length of the front surface or the rear surface of the bottom unit 101 may be formed to be equal to or greater than a contact area between the wheel of the moving robot 10 and a ground surface, in a case where the wheel of the moving robot 10 contacts the ground surface. In this case, since an area of the bottom unit 101 can be minimized, operation efficiency of the moving robot 10 may be enhanced, and damage of lawn may be minimized.

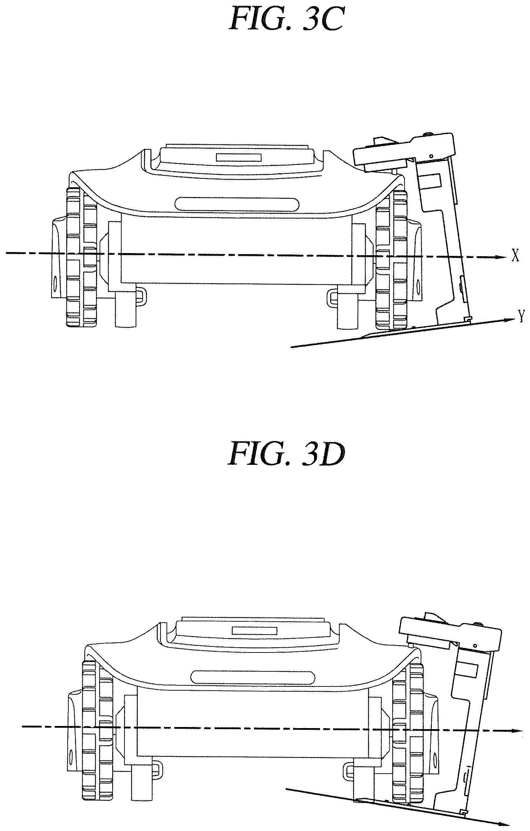

Referring to FIGS. 3C and 3D, if an absolute value of an angle (α) formed between a rotation shaft of the wheel 40 of the moving robot 10 and the bottom unit 101 is within a preset range, the terminals 113 of the terminal unit 103 of the charging equipment 100 may maintain a contacted state with the power receiving unit 60 of the moving robot 10.

That is, if the angle (α) formed between the rotation shaft of the wheel 40 of the moving robot 10 and the bottom unit 101 is within the preset range, the charging equipment 100 may supply power to the moving robot 10 through the terminal unit 103. For instance, the preset range may be 0° ∼ 10°.

Although not shown in FIGS. 3C and 3D, the absolute value of the angle (α) is within the preset range, a coupling angle between the terminal unit 103 and the supporting unit 102 may be changed such that the contacted state between the terminals 113 and the power receiving unit 60 may be maintained.

In another embodiment, a relative coupling position between the terminal unit 103 and the terminals 113 provided on a lower surface of the terminal unit 103 may be changed. In this case, the terminals 113 may be formed of a magnetic substance, and may move in a coupled state to the lower surface of the terminal unit 103, so as to contact the power receiving unit 60 formed of a metallic material.

In another embodiment, an elastic member (not shown) may be provided between the terminals 113 and the terminal unit 103, and the elastic member may change a protruded degree of the terminals 113. With such a configuration, the contacted state between the terminals 113 and the power receiving unit 60 may be maintained, even if an entering posture of the moving robot 10 for charging is changed.

Accordingly, the charging equipment 100 of the present invention may efficiently supply power to the moving robot 10, even if the operation region 1000 does not have a flat surface. That is, the charging equipment 100 of the present invention may efficiently supply power to the moving robot 10, even when the moving robot 10 has been mounted to the charging equipment 100 with various postures.

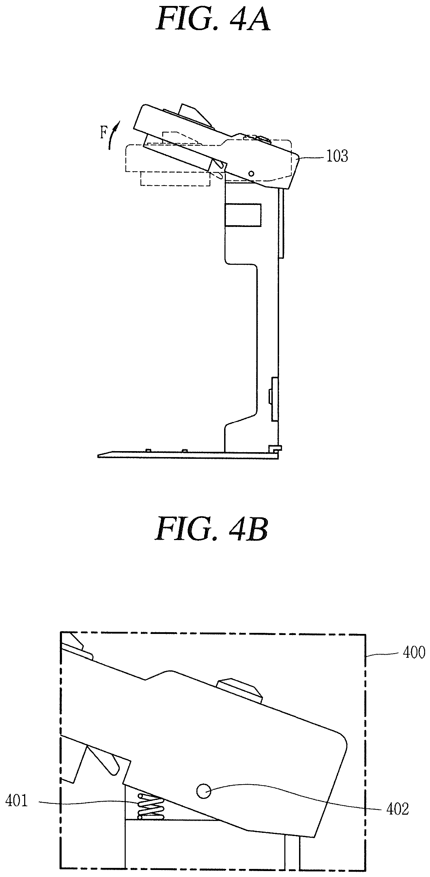

FIGS. 4A and 4B are views illustrating an embodiment of the terminal unit of the charging equipment for the moving robot according to the present invention.

Referring to FIG. 4A, a coupling angle between the terminal unit 103 and the supporting unit 102 of the charging equipment 100 may be changed by an external force. More specifically, in a state where a first external force has been applied to the terminal unit 103 in a direction parallel to a ground surface, if a second external force is applied to the terminal unit 103 in a direction perpendicular to the ground surface, the coupling angle between the terminal unit 103 and the supporting unit 102 may be changed.

FIG. 4B illustrates an embodiment of a coupling part 400 between the terminal unit 103 and the supporting unit 102.

As shown in FIG. 4B, the terminal unit 103 and the supporting unit 102 may be coupled to each other by a hinge 401. And the terminal unit 103 and the supporting unit 102 may be coupled to two ends of a spring 402. With such a configuration, if an external force applied to the terminal unit 103 disappears, the coupling angle between the terminal unit 103 and the supporting unit 102 may return to an initial value. For instance, the initial value may be 90°.

FIG. 4B illustrates that the terminal unit 103 and the supporting unit 102 are coupled to two ends of the spring 402. However, the present invention is not limited to this.

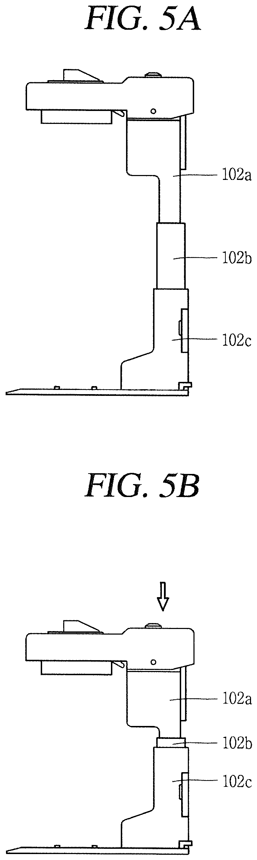

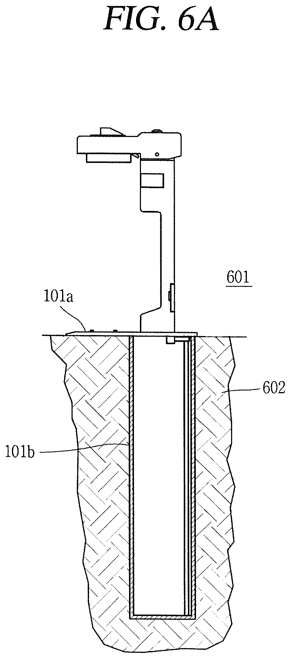

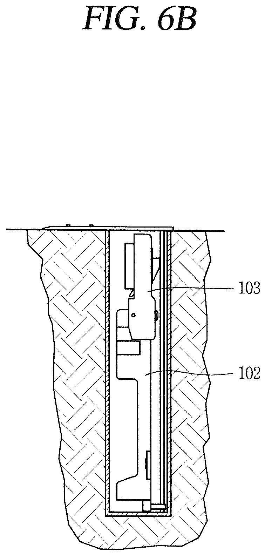

FIGS. 5A, 5B, 6A and 6B are views illustrating an embodiment of the supporting unit 102 of the charging equipment 100.

Referring to FIG. 5A, the supporting unit 102 may include a plurality of rods 102a, 102b, 102c, and the plurality of rods 102a, 102b, 102c may be formed to have different diameters. And the plurality of rods 102a, 102b, 102c may be sequentially coupled to each other.

As shown in FIG. 5B, as the coupled state among the plurality of rods is changed, a length of the supporting unit 102 may be changed.

For instance, each rod may be provided with a hole member (not shown) and a pin member (not shown) for fixing a coupled state between the rods. Once the hole member of the first rod 102a is coupled to the pin member of the second rod 102b, the coupled state between the first and second rods may be maintained.

In another embodiment, if the coupled state between the hole member of the first rod 102a and the pin member of the second rod 102b is released, the coupled state between the first and second rods may be changed. That is, if the coupled state between the hole member of the first rod 102a and the pin member of the second rod 102b is released, the first rod 102a may be inserted into the second rod 102b more deeply, or may be protruded out from the second rod 102b.

In another embodiment, the charging equipment 100 may further include a controller (not shown). The controller may control the coupled state among the plurality of rods to be changed, if it is determined that no power is being supplied to the moving robot 10. More specifically, if it is determined that no power is being supplied to the moving robot 10, the controller may change the coupled state among the plurality of rods such that a length of the supporting unit may be reduced.

In another embodiment, the controller may determine whether the moving robot 10 is approaching the charging equipment 100 or not, based on information received from the sensor 112. In this case, the controller may change the coupled state among the plurality of rods such that the length of the supporting unit may be increased, for power supply to the moving robot 10.

Although not shown in FIGS. 5A and 5B, a first coupled state maintaining member (not shown) and a second coupled state maintaining member (not shown), configured to maintain a coupled state between the first and second rods, may be provided at the first and second rods 102a, 102b, respectively. The first and second coupled state maintaining members may be formed against an external force applied to the supporting unit, such that a coupled state between the first and second rods may be maintained.

Referring to FIG. 6A, the bottom unit 101 of the charging equipment 100 according to the present invention may include a first bottom member 101a installed on a ground surface, and a second bottom member 101b buried below the ground surface. More specifically, the second bottom member 101b may be formed to have a width greater than a width of the supporting unit.

Referring to FIG. 6B, the supporting unit 102 coupled to the bottom unit 101, and the terminal unit 103 coupled to the supporting unit 102 may be inserted into the second bottom member 101b, as a coupled state among the bottom unit, the supporting unit and the terminal unit is changed.

For instance, the coupled state among the bottom unit, the supporting unit and the terminal unit may be changed by a user's external force, or under control of the controller of the charging equipment 100. As another example, the bottom unit 101 may be provided with a sensor.

When the charging equipment 100 is not supplying power to the moving robot 10, an installation volume of the charging equipment 100 may be minimized. This may enhance a user's convenience.

FIG. 7 is a view illustrating an embodiment of a rear surface of the supporting unit 102 of the charging equipment 100 according to the present invention.

As shown in FIG. 7, wire caps 122a, 122b may be provided on right and left sides of a rear surface of the supporting unit 102.

In an embodiment, the wire cap 122 may cover a coupling member between the boundary wire 1200 and the charging equipment 100, in a case where the charging equipment 100 and the boundary wire 1200 are connected to the same power source.

In another embodiment, the wire cap 122 may cover a coupling member between a power supply wire (not shown) connected to the boundary wire 1200 and the charging equipment 100.

The present invention may have the following advantages.
Firstly, when the charging equipment for supplying power to the moving robot (lawn mower) is installed, damage of lawn positioned within an operation region of the lawn mower may be minimized.
Secondly, operation efficiency of the lawn mower may be enhanced by the charging equipment which does not hinder a driving of the lawn mower.

Further, as an installation region and a size of the charging equipment are reduced, a user's convenience in using the lawn mower may be enhanced.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A system including a charging equipment for a moving robot (10) and the moving robot (10), comprising:
a bottom unit (101) installed at part of an operation region (1000) of the moving robot (10);
a supporting unit (102) coupled to the bottom unit (101), and positioned on a lateral side of a body (50) of the moving robot (10) when the robot (10) is being charged, the body (50) including two main driving wheels (40) installed at a bottom surface of the rear side of the body (50); and
a terminal unit (103) coupled to the supporting unit (102), and positioned on an upper side of the body (50) of the moving robot (10) when the robot (10) is being charged,
wherein the bottom unit (101) is formed to mount one of the plurality of main driving wheels (40) of the moving robot (10) when the moving robot (10) is being charged,
wherein the charging equipment for the moving robot (10) is installed at part of the operating region including an installation region of a boundary wire (1200).

2. The system of claim 1, wherein the bottom unit (101) is provided with a plurality of holes (111).

3. The system of claim 2, wherein the bottom unit (101) includes protrusions (121) formed between the plurality of holes (111).

4. The system of any one of the preceding claims, wherein a coupling angle between the terminal unit (103) and the supporting unit (102) is changed by 21 an external force.

5. The system of any one of the preceding claims, wherein if the moving robot (10) is being charged, the supporting unit (102) is provided with a concaved portion facing the body (50) of the moving robot (10).

6. The system of any one of the preceding claims, wherein an IR sensor (112) is attached to a side surface of the supporting unit (102), and
wherein the attached IR sensor (112) transmits a preset signal to the moving robot (10).

7. The system of claim 6, wherein the preset signal transmitted from the IR sensor (112) includes information about a position of the charging equipment, information indicating whether a charging operation is executable or not.

8. The system of any one of the preceding claims, wherein the supporting unit (102) includes a plurality of rods (102a-c),
wherein the plurality of rods (102a-c) are formed to have different diameters, and are sequentially coupled to each other, and
wherein as the coupled state among the plurality of rods (102a-c) is changed, a length of the supporting unit (102) is changed.

9. The system of any one of the preceding claims, wherein the bottom unit (101) includes a first bottom member (101a) installed on a ground surface, and a second bottom member (101b) buried below the ground surface, and
wherein at least one of the bottom unit (101), the supporting unit (102), and the terminal unit (103) is inserted into the second bottom member (101b), as the coupled state among the bottom unit (101), the supporting unit (102) and the terminal unit (103) is changed.

10. The system of any one of the preceding claims, wherein at least one of the bottom unit (101), the supporting unit (102), and the terminal unit (103) includes coupling portions connected to the boundary wire (1200).

11. The system of claim 10 wherein the bottom unit (101) is installed such that its one surface contacts the boundary wire (1200).

## Patentansprüche

1. System, das eine Ladevorrichtung für einen beweglichen Roboter (10) und den beweglichen Roboter (10) aufweist, das aufweist:
eine Bodeneinheit (101), die an einem Teil eines Arbeitsbereichs (1000) des beweglichen Roboters (10) angebracht ist;
eine Halteeinheit (102), die mit der Bodeneinheit (101) gekoppelt und auf einer lateralen Seite eines Körpers (50) des beweglichen Roboters (10) angeordnet ist, wenn der Roboter (10) geladen wird, wobei der Körper (50) zwei Hauptantriebsräder (40) aufweist, die an einer Bodenfläche der Rückseite des Körpers (50) angebracht sind; und
eine Anschlusseinheit (103), die mit der Halteeinheit (102) gekoppelt und an einer Oberseite des Körpers (50) des beweglichen Roboters (10) angeordnet ist, wenn der Roboter (10) geladen wird,
wobei die Bodeneinheit (101) ausgebildet ist, eines der mehreren Hauptantriebsräder (40) des beweglichen Roboters (10) aufzunehmen, wenn der bewegliche Roboter (10) geladen wird,
wobei die Ladevorrichtung für den beweglichen Roboter (10) an einem Teil des Arbeitsbereichs angebracht ist, die einen Installationsbereich eines Begrenzungsdrahts (1200) aufweist.

2. System nach Anspruch 1, wobei die Bodeneinheit (101) mit mehreren Löchern (111) versehen ist.

3. System nach Anspruch 2, wobei die Bodeneinheit (101) Vorsprünge (121) aufweist, die zwischen den mehreren Löchern (111) ausgebildet sind.

4. System nach einem der vorhergehenden Ansprüche, wobei ein Kopplungswinkel zwischen der Anschlusseinheit (103) und der Halteeinheit (102) durch eine äußere Kraft geändert wird.

5. System nach einem der vorhergehenden Ansprüche, wobei, wenn der bewegliche Roboter (10) geladen wird, die Halteeinheit (102) mit einem konkaven Abschnitt versehen ist, der zum Körper (50) des beweglichen Roboters (10) weist.

6. System nach einem der vorhergehenden Ansprüche, wobei ein IR-Sensor (112) an einer Seitenfläche der Halteeinheit (102) befestigt ist, und
wobei der befestigte IR-Sensor (112) ein voreingestelltes Signal an den beweglichen Roboter (10) sendet.

7. System nach Anspruch 6, wobei das vom IR-Sensor (112) gesendete voreingestellte Signal Informationen über eine Position der Ladevorrichtung, wobei Informationen anzeigen, ob ein Ladevorgang ausführbar ist oder nicht.

8. System nach einem der vorhergehenden Ansprüche, wobei die Halteeinheit (102) mehrere Stangen (102a-c) aufweist,
wobei die mehreren Stangen (102a-c) so ausgebildet sind, dass sie unterschiedliche Durchmesser aufweisen und sequentiell miteinander gekoppelt sind, und
wobei, wenn der Kopplungszustand zwischen den mehreren Stangen (102a-c) geändert wird, eine Länge der Halteeinheit (102) geändert wird.

9. System nach einem der vorhergehenden Ansprüche, wobei die Bodeneinheit (101) ein erstes Bodenelement (101a), das auf einer Erdoberfläche angebracht ist, und ein zweites Bodenelement (101b) aufweist, das unter der Erdoberfläche vergraben ist, und
wobei die Bodeneinheit (101) und/oder die Halteeinheit (102) und/oder die Anschlusseinheit (103) in das zweite Bodenelement (101b) eingesetzt ist, wenn der Kopplungszustand zwischen der Bodeneinheit (101), der Halteeinheit (102) und der Anschlusseinheit (103) geändert wird.

10. System nach einem der vorhergehenden Ansprüche, wobei die Bodeneinheit (101) und/oder die Halteeinheit (102) und/oder die Anschlusseinheit (103) Kopplungsabschnitte aufweisen, die mit dem Begrenzungsdraht (1200) verbunden sind.

11. System nach Anspruch 10, wobei die Bodeneinheit (101) so angebracht ist, dass ihre eine Oberfläche den Begrenzungsdraht (1200) berührt.

## Revendications

1. Système, comprenant un équipement de charge pour un robot mobile (10) et le robot mobile (10), comprenant :
une unité inférieure (101) montée sur une partie d'une zone fonctionnelle (1000) du robot mobile (10) ;
une unité de support (102) raccordée à l'unité inférieure (101) et disposée sur un côté latéral du corps (50) du robot mobile (10) quand le robot (10) est en cours de chargement, le corps (50) comprenant deux roues d'entraînement principales (40) montées sur une surface inférieure du côté arrière du corps (50) ; et
une unité terminale (103) raccordée à l'unité de support (102) et disposée sur un côté supérieur du corps (50) du robot mobile (10) quand le robot (10) est en cours de chargement,
l'unité inférieure (101) étant formée pour recevoir une roue de la pluralité des roues d'entraînement principales (40) du robot mobile (10) quand le robot mobile (10) est en cours de chargement,
l'équipement de charge pour le robot mobile (10) étant monté sur une partie de la zone fonctionnelle comprenant une zone d'installation d'un câble périphérique (1200).

2. Système selon la revendication 1, où l'unité inférieure (101) est prévue avec une pluralité de trous (111).

3. Système selon la revendication 2, où l'unité inférieure (101) présente des protubérances (121) formées entre les trous de la pluralité de trous (111).

4. Système selon l'une des revendications précédentes, où l'angle d'accouplement entre l'unité terminale (103) et l'unité de support (102) est modifié par une force externe.

5. Système selon l'une des revendications précédentes, où, si le robot mobile (10) est en cours de chargement, l'unité de support (102) est prévue avec une partie concave opposée au corps (50) du robot mobile (10).

6. Système selon l'une des revendications précédentes, où un capteur IR (112) est fixé à une surface latérale de l'unité de support (102), et
où le capteur IR (112) fixé transmet un signal prédéfini au robot mobile (10).

7. Système selon la revendication 6, où le signal prédéfini transmis par le capteur IR (112) comprend une information sur la position de l'équipement de charge, information indiquant si un fonctionnement de charge est exécutable ou non.

8. Système selon l'une des revendications précédentes, où l'unité de support (102) comprend une pluralité de barres (102a-c),
où les barres de la pluralité de barres (102a-c) sont formées avec des diamètres différents, et séquentiellement raccordées l'une à l'autre, et
où un changement de l'état de raccordement de la pluralité de barres (102a-c) entraîne le changement de la longueur de l'unité de support (102).

9. Système selon l'une des revendications précédentes, où l'unité inférieure (101) comprend un premier élément inférieur (101a) monté sur une surface de base, et un deuxième élément inférieur (101b) enfoncé sous la surface de base, et
où l'unité inférieure (101) et/ou l'unité de support (102) et/ou l'unité terminale (103) sont insérées dans le deuxième élément inférieur (101b) quand l'état de raccordement de l'unité inférieure (101), de l'unité de support (102) et de l'unité terminale (103) est modifié.

10. Système selon l'une des revendications précédentes, où l'unité inférieure (101) et/ou l'unité de support (102) et/ou l'unité terminale (103) comprennent des parties de raccordement reliées au câble périphérique (1200).

11. Système selon la revendication 10, où l'unité inférieure (101) est montée de telle manière que sa première surface contacte le câble périphérique (1200).
